(19) Europäisches Patentamt
European Patent Office
Office européen des brevets

(11) Veröffentlichungsnummer: **0 199 292**
**A2**

(12) # EUROPÄISCHE PATENTANMELDUNG

(21) Anmeldenummer: **86105329.6**

(22) Anmeldetag: **17.04.86**

(51) Int. Cl.4: **C08G 59/06**, C08G 59/12, C08G 59/50

(30) Priorität: **20.04.85 DE 3514347**

(43) Veröffentlichungstag der Anmeldung: **29.10.86 Patentblatt 86/44**

(84) Benannte Vertragsstaaten: **BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Tesch, Helmut, Dr.**
**Goethestrasse 12**
**D-6701 Birkenheide(DE)**
Erfinder: **Portugall, Michael, Dr.**
**Raiffeisenstrasse 7**
**D-6706 Wachenheim(DE)**
Erfinder: **Stutz, Herbert, Dr.**
**Im Eichbaeumle 93**
**D-7500 Karlsruhe 1(DE)**
Erfinder: **Heinz, Gerhard, Dr.**
**Im Vogelsang 2**
**D-6719 Weisenheim(DE)**

(54) **Epoxidharz-Mischungen.**

(57) Eine härtbare Epoxidharzmischung enthält ein Addukt aus einem Epoxidharz und einem difunktionellen Phenol oder einer difunktionellen aromatischen Carbonsäure der Formel

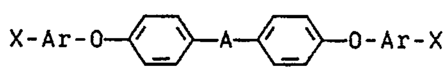

mit A = $SO_2$ oder CO,

Ar = 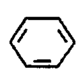 oder 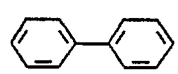

X = OH oder COOH,

sowie ein aromatisches Amin als Härter.

EP 0 199 292 A2

# Epoxidharz-Mischungen

Die Erfindung betrifft Epoxidharz-Mischungen, die bei der Aushärtung Formstoffe mit hoher Gebrauchstemperatur und guter Zähigkeit ergeben.

Thermisch härtbare Mischungen aus Epoxidharzen und aromatischen Aminen sind bekannt. Die entsprechenden ausgehärteten Formstoffe weisen hohe Gebrauchstemperaturen auf, sind jedoch bei Raumtemperatur für viele Anwendungszwecke zu spröde.

Es sind mehrere Methoden bekannt, durch geeignete Zusätze die Schlagzähigkeit und Bruchdehnung derartiger Materialien zu verbessern. In den meisten Fällen führen derartige Zusätze jedoch zu einem starken Abfall der Wärmeformbeständigkeit und Steifigkeit der ausgehärteten Formstoffe.

Der Erfindung lag daher die Aufgabe zugrunde, die Zähigkeitseigenschaften von mit aromatischen Aminen gehärteten Epoxidharzen zu verbessern, ohne daß damit ein starker Abfall in der Wärmeformbeständigkeit und Steifigkeit verbunden ist.

Diese Aufgabe ist gelöst bei Epoxidharzmischungen aus

a) einem Addukt aus

a1) einem Epoxidharz und

a2) einem difunktionellen Phenol oder einer difunktionellen aromatischen Carbonsäure der Formel

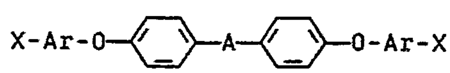

mit A = $SO_2$ oder CO,

Ar = 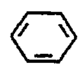 oder 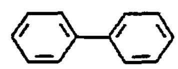

X = OH oder COOH,

wobei das Verhältnis a1 zu a2 so gewählt wird, daß auf eine aromatische Hydroxyl- bzw. Carboxylgruppe 1,5 bis 50 Epoxidgruppen kommen, und

b)einem aromatischen Amin als Härter.

Geeignete Epoxidharze sind nieder-und hochmolekulare Verbindungen mit end-oder seitenständigen oder in cyclische Systeme eingebauten Epoxidgruppen. Sie können flüssig, halbfest oder fest sein. Bevorzugt sind Verbindungen, die mehr als eine Epoxidgruppe pro Molekül enthalten.

Bevorzugte Epoxidharze sind Umsetzungsprodukte von mehrfach funktionellen Alkoholen, Phenolen, cycloaliphatischen Carbonsäuren, aromatischen Aminen oder Aminophenolen mit Epichlorhydrin, sowie cycloaliphatische Epoxide und cycloaliphatische Epoxidester. Es können auch Mischungen von verschiedenen Epoxidharzen zum Einsatz kommen. Besonders bevorzugt sind Bisphenol-A-Diglycidylether, Tetraglycidyldiaminodiphenylmethan und epoxidierte Novolake. Die Harze können die üblichen Verdünnungsmittel, wie Phenylglycidylether oder Butylglycidylether enthalten.

Aus den Epoxidharzen wird erfindungsgemäß ein Addukt mit den difunktionellen Phenolen bzw. Carbonsuren gebildet, wobei diese kettenverlängernd wirken. Bevorzugter Kettenverlängerer ist das Bisphenol der Formel

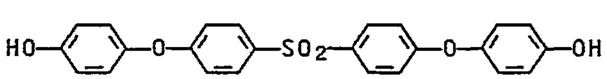 .

Zur Herstellung des Addukts erhitzt man eine Mischung aus Epoxidharz und Kettenverlängerer in Gegenwart eines geeigneten Katalysators, wie tert.-Amin oder Phosphin oder quarternärer Ammonium oder Phosphoniumverbindung, gegebenenfalls in Gegenwart eines inerten Lösungsmittels, solange auf eine Temperatur von etwa 100 bis 160°C bis die Reaktion beendet ist. Dies kann z.B. durch Verfolgen des Epoxid-oder Phenol-bzw. Carbonsäuregehaltes der Mischung festgestellt werden. Das Verhältnis Epoxidharz zu Kettenverlängerer ist so zu wählen, daß auf eine aromatische Hydroxyl-bzw. Carboxylgruppe 1,5 bis 50, vorzugsweise 2 bis 20 Epoxidgruppen kommen. Man erhält also eine Mischung aus Addukt mit Epoxidendgruppen und überschüssigem Epoxidharz.

Als Härter werden bevorzugt aromatische Diamine eingesetzt, beispielsweise 4,4'-Diaminodiphenylmethan, Diaminodiphenylsulfon und Diaminodiphenylketon. Geeignete Amine und Epoxidharze sind ausführlich in der GB-PS 1 017 699 beschrieben.

Die Herstellung der Epoxidharzmischungen erfolgt im allgemeinen durch Auflösen des festen Härters in einer Schmelze aus Addukt und Epoxidharz. Gegebenenfalls kann ein Lösungsmittel mitverwendet werden, das dann durch Destillation wieder entfernt wird.

Das Verhältnis Epoxidkomponenten zu Amin-Härter wird so gewählt, daß auf eine Epoxidgruppe etwa 0,5 bis 2,4 reaktive Amin-Wasserstoffatome kommen, vorzugsweise beträgt das Verhältnis 0,9:1 bis 1,1:1.

Den härtbaren Mischungen können weiterhin übliche Härtungsbeschleuniger, wie z.B. Bortrifluoridmonoethylamin oder Salicylsäure in einer Menge von etwa 0,01 bis 5 Gew.-Teile auf 100 Teile Epoxidharz-Komponenten zugesetzt werden. Die Mischungen können ferner übliche Zusatzstoffe, wie Pigmente, Füllstoffe, Verstärkungsfasern, Flammschutzmittel und nichtflüchtige Streckmittel enthalten.

Die härtbaren Mischungen können für Beschichtungen, als Klebstoffe und als Bindemittel für faserverstärkte Werkstoffe eingesetzt werden.

Faserverstärkte Werkstoffe werden über die sogenannte Prepreg-Stufe hergestellt. Diese Technologie ist dem Fachmann vertraut. Es hat sich gezeigt, daß die erfindungsgemäßen Zusammensetzungen wegen der erhöhten Schmelzviskosität ein verbessertes Fließverhalten im Vergleich zu herkömmlichen Mischungen aus Epoxidharzen und aromatischem Amin aufweisen. Prepregs mit sogenannten "controlled flow"-Verhalten sind mit den Mischungen herstellbar.

Die Mischungen werden bei Temperaturen von etwa 140 bis etwa 250°C, bevorzugt von 160 bis 220°C während etwa 2 bis 20 Stunden ausgehärtet.

Beispiel

100 Gew.-Teile Bisphenol A-Diglycidylether - (Epikote® 828 von Shell, Epoxidgehalt 0,53 mol/100g) werden mit 35 Gew.-Teilen

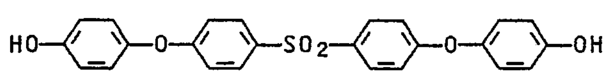

bei 150°C vermischt. Nach einigen Minuten ist eine homogene Lösung entstanden. Man setzt 0,05 Gew.-Teile Triphenylphosphin zu und rührt bei 150°C 100 min. Der Epoxidgehalt des Addukts beträgt danach 0,28 mol/100g.

24 Gew.-Teile 4,4'-Diaminodiphenylsulfon - (Araldit® 976 von Ciba-Geigy) werden der 150°C heißen Mischung zugesetzt. Nach 10 min Rühren ist der Härter vollständig aufgelöst. Die homogene Mischung wird einige Minuten bei 30 mbar entgast, um die Luft zu entfernen. Dann wird die Mischung in eine Stahlplattenform gegossen und zunächst 3 h bei 150°C, danach 12 h bei 180°C gehärtet. An ausgesägten Probekörpern werden bei 23°C folgende Eigenschaften gemessen:

| | | |
|---|---|---|
| Schlagzähigkeit (DIN 53 453) | 82 | $kJ/m^2$ |
| Reißdehnung (DIN 53 455) | 8,2 | % |
| Zugfestigkeit (DIN 53 455) | 84 | $N/mm^2$ |
| Zug-Elastizitätsmodul (DIN 53 457) | 2830 | $N/mm^2$ |

Die Glasübergangstemperatur beträgt 170°C - (DIN 53 445).

Vergleichsbeispiel (ohne Addukt-Bildung)

100 Gew.-Teile Epikote 828 werden bei 150°C mit 33 Gew.-Teilen Araldit HT 976 vermischt. Der Härter ist nach einigen Minuten vollständig gelöst. Die Mischung wird entgast und analog der erfindungsgemäßen Mischung ausgehärtet.

Eigenschaften:

| | | |
|---|---|---|
| Schlagzähigkeit | 28 | $kJ/m^2$ |
| Reißdehnung | 4,8 | % |
| Zugfestigkeit | 71 | $N/mm^2$ |
| Zug-E-Modul | 3140 | $N/mm^2$ |
| Glasübergangstemperatur | 210 | °C |

**Ansprüche**

1. Härtbare Epoxidharzmischung, enthaltend

a) ein Addukt aus

a1) einem Epoxidharz und

a2) einem difunktionellen Phenol oder einer difunktionellen aromatischen Carbonsäure der Formel

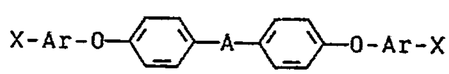

mit A = $SO_2$ oder CO,

Ar = 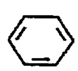 oder 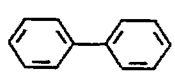

X = OH oder COOH,

wobei das Verhältnis. a1 zu a2 so gewählt wird, daß auf eine aromatische Hydroxyl-bzw. Carboxylgruppe 1,5 bis 50 Epoxidgruppen kommen, und

b) ein aromatisches Amin als Härter.